# EUROPÄISCHE PATENTSCHRIFT

(11) **EP 0 371 288 B1**
(45) Veröffentlichungstag und Bekanntmachung des Hinweises auf die Patenterteilung: **30.03.1994**
(21) Anmeldenummer: 89120681.5
(22) Anmeldetag: 08.11.1989
(51) Int. Cl.: B60R 22/44

(54) **Gurtaufroller für Sicherheitsgurt-Rückhaltesysteme in Fahrzeugen**
Webbing retractor for seat belt locking mechanisms in automotive vehicles
Enrouleur pour système de retenue de ceinture de sécurité dans les véhicules automobiles

(30) Priorität: 10.11.1988 DE 3838175
(43) Veröffentlichungstag der Anmeldung: 06.06.1990
(73) Patentinhaber: TRW REPA GMBH, 73553 Alfdorf (DE)
(72) Erfinder: Ebner, Ralf, D-7162 Gschwend (DE); Kaufmann, Bernhard, D-7071 Schechingen (DE)
(74) Vertreter: Degwert, Hartmut, Dipl.-Phys.

(56) Entgegenhaltungen:
- FR-A- 2 358 902
- FR-A- 2 419 734
- FR-A- 2 428 767
- US-A- 4 711 408

## Beschreibung

Die Erfindung betrifft einen Gurtaufroller für Sicherheitsgurt-Rückhaltesysteme in Fahrzeugen, mit einer zwischen einem gehäusefesten Teil und der das Gurtband aufnehmenden Gurtspule aufnehmenden Gurtspule wirksamen Aufrollfeder, mit einem funktionell zwischen Aufrollfeder und Gurtspule drehbar gelagerten Klinkenrad an das ein Ende der Aufrollfeder triebschlüssig angeschlossen ist, und mit einer schwächer als die Aufrollfeder dimensionierten, spiralförmigen Hilfsfeder, wobei die Hilfsfeder ihrerseits zwischen dem Klinkenrad und der Gurtspule wirksam ist und das Klinkenrad mit einer Klinke zusammenwirkt, die in Abhängigkeit von einem Steuerkriterium die Drehbewegung des Klinkenrades sperrt oder freigibt, und wobei dem Klinkenrad eine Bremseinrichtung zugeordnet ist, die seine Drehung relativ zum Gehäuse hemmt.

Zur Erhöhung der Gurtanlegequote wird angestrebt, den durch den angelegten Gurt auf den Fahrzeuginsassen ausgeübten Druck möglichst gering zu halten. Dies wird im Prinzip durch eine relativ schwach dimensionierte Aufrollfeder erreicht. Die Aufrollfeder muß jedoch ausreichend stark dimensioniert sein, um das Gurtband bei abgelegtem Gurt vollständig und zuverlässig aufzurollen, wodurch die Möglichkeiten einer Verminderung der Gurtspannung im angelegten Gurt beschränkt werden.

Aus der US-A-4,711,408 ist ein gattungsgemäßer Gurtaufroller mit Zugentlastung bekannt, bei dem zwischen einer Aufrollfeder und einer Gurtspule ein drehbar gelagertes Klinkenrad vorgesehen ist, das an ein Ende der Aufrollfeder triebschlüssig angeschlossen ist. Eine schwächer als die Aufrollfeder dimensionierte, spiralförmige Hilfsfeder ist ihrerseits zwischen dem Klinkenrad und der Gurtspule wirksam. Das Klinkenrad wirkt mit einer Klinke zusammen, die in Abhängigkeit von einem Steuerkriterium die Drehbewegung des Klinkenrades sperrt oder freigibt. Dem Klinkenrad ist eine Bremseinrichtung zugeordnet, die seine Drehung relativ zum Gehäuse hemmt. Die Bremseinrichtung ist durch eine teilkreisförmig gebogene Blattfeder gebildet, die bei schneller Drehung des Klinkenrades aufgeweitet wird und an ihrem Außenumfang in Reibungseingriff mit der Innenfläche eines gehäusefesten Ringes gelangt. Die Aufrollfeder und die Hilfsfeder liegen funktionell in Reihe zwischen dem Gehäuse des Gurtaufrollers und der Spule, solange der Sicherheitsgurt nicht angelegt ist. Da die Aufrollfeder stärker dimensioniert ist als die Hilfsfeder, wird letztere durch die Aufrollfeder vollständig gespannt, so daß sie "auf Block" gezogen ist und die durch die Aufrollfeder erzeugte Kraft unvermindert an der Gurtspule angreift. Sobald aber der Sicherheitsgurt angelegt ist, wird das Klinkenrad drehfest gehalten, so daß nur die schwächer dimensionierte Hilfsfeder zwischen dem Gehäuse und der Gurtspule wirksam ist und die Gurtspannung somit vermindert wird, um den Anlegekomfort zu erhöhen. Wird nun der Sicherheitsgurt wieder abgelegt, so gibt die Klinke das Klinkenrad frei, woraufhin die Aufrollfeder mit unverminderter Kraft zwischen Gehäuse und Gurtspule wirksam wird, so daß die Hilfsfeder gespannt wird.

Aus der FR-A-2 428 767 ist zur Beeinflussung der Federfunktion einer Spiralfeder ein lokales, elastisches Verstärkungselement bekannt. Das Verstärkungselement ist mit der Innenfläche der letzten Windung am Ende des Aufzugsvorgangs der Spiralfeder in Anlage. Auf diese Weise wird vermieden, daß die Spiralfeder bei schlagartigem Aufziehen bricht.

Der Erfindung liegt die Aufgabe zugrunde, einen Gurtaufroller der eingangs angegebenen Art dahingehend weiterzubilden, daß die Funktion der Bremseinrichtung mit besonders einfachen Mitteln gesteuert werden kann und die Umsteuerung zwischen verminderter und unverminderter Gurtspannung sanft und stoßfrei erfolgen soll.

Bei dem erfindungsgemäßen Gurtaufroller wird ein sanfter, stoßfreier und geräuscharmer Übergang zwischen verminderter und unverminderter Gurtspannung erreicht, indem die Bremseinrichtung aktiviert wird, bis die Hilfsfeder vollständig gespannt ist. Die Bremseinrichtung hemmt die unter der Kraft der Aufrollfeder erfolgende Drehbewegung des Klinkenrades solange, bis die Hilfsfeder vollständig gespannt ist, also "auf Block" gezogen ist. Es wird also vermieden, daß unter der Wirkung der von der Aufrollfeder ausgehenden Kraft das Klinkenrad stark beschleunigt wird und anschließend, wenn die Hilfsfeder gespannt ist, die Drehung des Klinkenrades abrupt abgebremst wird, wenn die Windungen der Hilfsfeder eng aufeinanderliegen, was zu einem Stoß und erheblicher Geräuschentwicklung führen würde.

Der erfindungsgemäße Gurtaufroller zeichnet sich dadurch aus, daß er die beschriebene "Komfortfunktion" mit einfachsten Mitteln verwirklicht, die überdies sehr zuverlässig arbeiten und verschleißarm sind.

Vorzugsweise weist bei dem erfindungsgemäßen Gurtaufroller der die Funktion der Bremseinrichtung bestimmende Mechanismus wenigstens ein an dem Klinkenrad gelagertes Eingriffsteil auf, an dem der Außenumfang der Hilfsfeder zumindest in deren nicht vollständig gespanntem Zustand anliegt und welches durch die Kraft der Hilfsfeder in eine Aktivierungsstellung bewegbar ist, in welcher dieses Eingriffsteil einen Reibungsschluß mit einem gehäusefesten Teil herbeiführt. Der Außendurchmesser der Hilfsfeder ist ein einfaches Kriterium, um festzustellen, ob die Hilfsfeder gespannt ist oder entspannt ist. Besonders zweckmäßig ist es, wenn das Eingriffsteil bei völlig gespannter Hilfsfeder, wenn also ihre Windungen eng aufeinanderliegen, vom Außenumfang der Hilfsfeder gelöst ist und selbsttätig in eine inaktivierte Stellung zurückkehrt, in der es keinen Reibungsschluß mit dem gehäusefesten Teil herbeiführt, so daß die Bremseinrichtung unwirksam ist. Obwohl also der erfindungsgemäße Gurtaufroller neben der Umschaltung zwischen unverminderter und verminderter Gurtspannung eine zusätzliche Funktion aufweist, nämlich die selektive Aktivierung einer Bremseinrichtung, die den Übergang zwischen verminderter und unverminderter Gurtspannung sanft, stoßfrei und geräuscharm ablaufen läßt, werden kaum zusätzliche Bauteile für die Steuerung dieser Funktion benötigt.

Um die Bremseinrichtung aktiviert zu halten, bis die Hilfsfeder vollständig oder nahezu vollständig gespannt ist, wird die Hilfsfeder im Bereich ihrer äußersten Windung oder Windungen verstärkt, so daß die innerhalb dieses Bereiches gelegenen Windungen zusammengezogen werden, bevor sich der Außenumfang der Hilfsfeder von dem Eingriffselement löst.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
- Fig. 1: eine schematische Seitenansicht der beschriebenen Ausführungsform des Gurtaufrollers, und
- Fig. 2: eine Schnittansicht dieses Gurtaufrollers entlang Linie II-II in Fig. 1.

In einem Gehäuse 10 des Gurtaufrollers ist eine Gurtspule 12 drehbar gelagert. Die Gurtspule 12 ist über einen in einer Zwischenkammer 14 aufgenommenen Mechanismus 16, der zum Verständnis der Erfindung nicht beiträgt und daher nicht beschrieben wird, drehfest mit einer Mitnehmerhülse 18 verbunden, die am Gehäuse drehbar gelagert ist. Diese Mitnehmerhülse 18 ist formschlüssig mit einem drehfest an die Gurtspule 12 angeschlossenen Teil 20 gekoppelt. Am Außenumfang der Mitnehmerhülse 18 greift das innere Ende einer spiralförmigen Hilfsfeder 22 an, deren Windungen die Mitnehmerhülse 18 koaxial umgeben. Das äußere Ende dieser Hilfsfeder 22 ist an ein Klinkenrad 24 angeschlossen, das mittels einer Nabe 26 drehbar auf einem angeformten Zapfen 28 einer Gehäusekappe 30 gelagert ist. Das Klinkenrad 24 weist an seinem Außenumfang gleichmäßig verteilte Klinkenzähne 32 auf. Diese Klinkenzähne 32 wirken mit einer am Gehäuse schwenkbar gelagerten Klinke 34 zusammen, die durch einen Elektromagnet 36 betätigt wird. Der Elektromagnet 36 wird seinerseits durch einen Schalter gesteuert, der im (nicht gezeigten) Gurtschloß so angeordnet ist, daß er durch Einstecken der Steckzunge in das Gurtschloß betätigt wird.

Am Außenumfang der Nabe 26 des Klinkenrades 24 greift das innere Ende einer spiralförmigen Aufrollfeder 38 an. Das äußere Ende dieser Aufrollfeder 38 ist an der Gehäusekappe 30 festgelegt. Die Aufrollfeder 38 und die Hilfsfeder 22 sind somit über das Klinkenrad 24 funktionell in Reihe zwischen Gehäusekappe 30 und Gurtspule 12 geschaltet, solange das Klinkenrad 24 frei drehbar ist. Die Aufrollfeder 38 ist aber erheblich stärker dimensioniert als die Hilfsfeder 22, so daß sie diese spannt, bis ihre Windungen eng aufeinanderliegen. In diesem Zustand ist dann die unverminderte Kraft der Aufrollfeder 38 zwischen Gehäuse 10 und Gurtspule 12 wirksam.

Wenn durch Betätigung des Schalters im Gurtschloß der Elektromagnet 36 angesteuert wird, verschwenkt dessen Anker die Klinke 34 mit ihrem Klinkenzahn in die Bahn der Klinkenzähne 32 des Klinkenrades 24, so daß dessen Drehung gesperrt wird. Da nunmehr das Klinkenrad 24 am Gehäuse festgehalten wird, ist zwischen Gehäuse und Gurtspule 12 nur noch die Kraft der Hilfsfeder 22 wirksam, also eine gegenüber der Kraft der Aufrollfeder 38 erheblich verminderte Kraft, so daß die Spannung im Gurtband entsprechend vermindert wird.

Beim Ablegen des Sicherheitsgurtes wird die Klinke 34 durch den Elektromagnet 36 freigegeben und unter der Wirkung einer Rückstellfeder aus der Bahn der Klinkenzähne 32 bewegt, so daß das Klinkenrad 24 nunmehr wieder frei drehbar ist. Die Aufrollfeder 38 ist nun bestrebt, das Klinkenrad 24 in Drehung zu versetzen und dabei die Hilfsfeder 22 zu spannen, bis ihre Windungen eng aufeinanderliegen. Sobald dieser Zustand erreicht ist, wird zwischen Gurtspule und Gehäuse wieder die unverminderte Kraft der Aufrollfeder 38 wirksam.

Damit nun dieser Übergang zwischen verminderter und unverminderter Gurtspannung sanft, stoßfrei und geräuscharm erfolgt, ist eine Bremseinrichtung vorgesehen, die dafür sorgt, daß die Drehung des Klinkenrades 24 gehemmt wird, bis die Hilfsfeder 22 vollständig gespannt ist. Eine übermäßig hohe Beschleunigung dieses Klinkenrades 24 mit entsprechend abrupter Abbremsung bei vollständig gespannter Hilfsfeder 22 wird so vermieden.

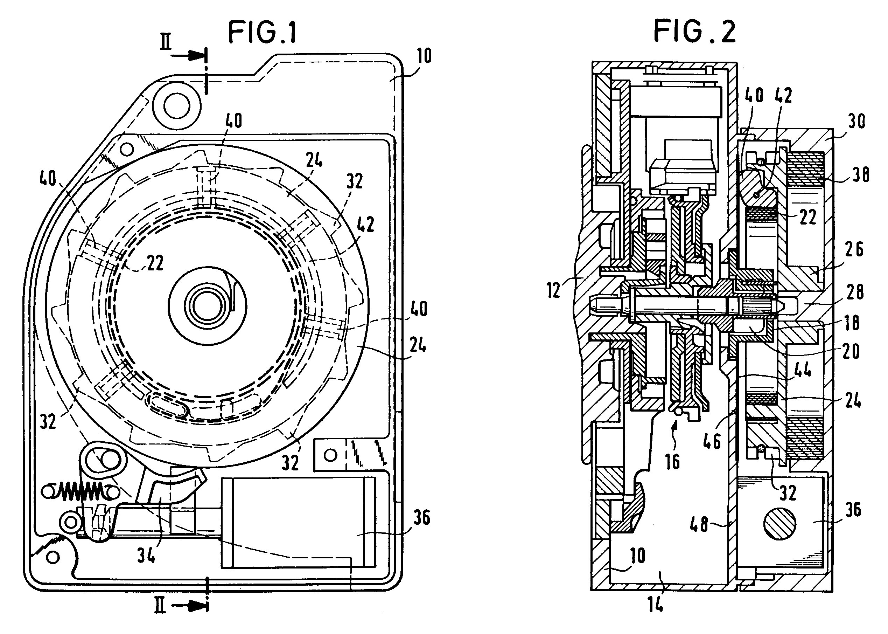

Diese Bremseinrichtung besteht bei der beschriebenen Ausführungsform aus einer Anzahl von Eingriffselementen 40, die über die der Gurtspule 12 zugewandte Seitenfläche des Klinkenrades 24 regelmäßig verteilt und an diesem Klinkenrad 24 gelagert sind. In Fig. 2 ist eines dieser Eingriffselemente 40 gezeigt. Dieses Eingriffselement 40 bildet einen zweiarmigen Hebel, der mittels eines an dem Klinkenrad 24 gehaltenen Drahtringes 42 schwenkbar am Klinkenrad 24 gelagert ist. Der erste, annähernd axiale Arm des Eingriffselementes 40 liegt am Außenumfang der Hilfsfeder 22 an, solange diese nicht gespannt ist. Der zweite, annähernd radiale Arm des Eingriffselementes 40 bildet eine der Gurtspule 12 zugewandte Angriffsfläche, die triebschlüssig mit einer Reibscheibe 44 zusammenwirkt, welche drehbar auf der Mitnehmerhülse 18 gelagert ist. Diese Reibscheibe 44 besitzt auf ihrer von dem Eingriffselement 40 abgewandten Seite eine Reibfläche, die mit einer gegenüberliegenden Reibfläche 46 einer Gehäusewandung 48 in Reibeingriff steht. Durch den vom Außenumfang der Hilfsfeder 22 ausgeübten Druck wird das Eingriffselement 40 mit seinem radialen Am annähernd in Axialrichtung gegen die Reibscheibe 44 verschwenkt, wobei die Reibflächen zwischen Reibscheibe und Gehäusewand 48 aneinandergedrückt werden. Fig. 2 zeigt also den aktivierten Zustand der Bremseinrichtung.

Dieser aktivierte Zustand der Bremseinrichtung bleibt erhalten, bis die Hilfsfeder 22 vollständig oder nahezu vollständig gespannt ist. Zu diesem Zweck ist die Hilfsfeder 22 im Bereich ihres Außenumfanges bzw. ihrer äußeren Windung oder Windungen verstärkt. Dies läßt sich auf einfache Weise durch Einlegen einer Blattfeder in diesem Bereich zwischen zwei Windungen der Hilfsfeder 22 erreichen. Die Bremseinrichtung bleibt also solange aktiviert, bis der Übergang zwischen verminderter und unverminderter Gurtspannung vollzogen ist, so daß ein sanfter, stoßfreier und geräuscharmer Übergang gewährleistet ist.

Bei einer weiteren, nicht näher beschriebenen Ausführungsform werden die Eingriffselemente durch den Druck der Hilfsfeder 22 in deren entspanntem Zustand unmittelbar radial auswärtsgedrückt, so daß sie beispielsweise mit ihrem Außenumfang an einer gehäusefesten Reibfläche in Eingriff gelangen, die das Klinkenrad 24 umgibt.

## Patentansprüche

1. Gurtaufroller für Sicherheitsgurt-Rückhaltesysteme in Fahrzeugen, mit einer zwischen einem gehäusefesten Teil und der das Gurtband aufnehmenden Gurtspule aufnehmenden Gurtspule wirksamen Aufrollfeder, mit einem funktionell zwischen Aufrollfeder (38) und Gurtspule (12) drehbar gelagerten Klinkenrad (24), an das ein Ende der Aufrollfeder (38) triebschlüssig angeschlossen ist, und mit einer schwächer als die Aufrollfeder dimensionierten, spiralförmigen Hilfsfeder (22), wobei die Hilfsfeder (22) ihrerseits zwischen dem Klinkenrad (24) und der Gurtspule (12) wirksam ist und das Klinkenrad (24) mit einer Klinke (34) zusammenwirkt, die in Abhängigkeit von einem Steuerkriterium die Drehbewegung des Klinkenrades (24) sperrt oder freigibt, und wobei dem Klinkenrad (24) eine Bremseinrichtung (40, 44, 46) zugeordnet ist, die seine Drehung relativ zum Gehäuse (10) hemmt, dadurch gekennzeichnet, daß die Funktion der Bremseinrichtung (40, 44, 46) über den Außendurchmesser der Hilfsfeder (22) gesteuert wird, wobei die Bremseinrichtung (40, 44, 46) mindestens dann aktiviert ist, wenn die Hilfsfeder (22) entspannt ist, und inaktiv ist, wenn die Hilfsfeder (22) gespannt ist.

2. Gurtaufroller nach Anspruch 1, dadurch gekennzeichnet, daß die Hilfsfeder (22) mit ihrem Außenumfang einen Mechanismus (40) betätigt, der die Funktion der Bremseinrichtung bestimmt.

3. Gurtaufroller nach Anspruch 2, dadurch gekennzeichnet, daß der Mechanismuns wenigstens ein an dem Klinkenrad (24) gelagertes Eingriffsteil (40) aufweist, an dem der Außenumfang der Hilfsfeder (22) zumindest in deren nicht vollständig gespanntem Zustand anliegt und welches durch die Kraft der Hilfsfeder (22) in eine Aktivierungsstellung bewegbar ist, in welcher dieses Eingriffsteil (40) einen Reibungsschluß mit einem gehäusefesten Teil (48) herbeiführt.

4. Gurtaufroller nach Anspruch 3, dadurch gekennzeichnet, daß das Eingriffsteil (40) bei völlig gespannter Hilfsfeder (22) vom Außenumfang der Hilfsfeder (22) gelöst ist und selbsttätig in eine inaktivierte Stellung bewegt wird, in der es keinen Reibungsschluß mit dem gehäusefesten Teil (48) herbeifuhrt.

5. Gurtaufroller nach einem der Ansprüche 3 und 4, dadurch gekennzeichnet, daß das Eingriffselement (40) durch den vom Außenumfang der Hilfsfeder (22) ausgeübten Druck in Axialrichtung in die Aktivierungsstellung gedrückt wird.

6. Gurtaufroller nach Anspruch 5, dadurch gekennzeichnet, daß das Eingriffselement (40) als zweiarmiger Hebel ausgebildet ist, der an dem Klinkenrad (24) schwenkbar gelagert ist und mit seinem ersten, etwa axialen Arm am Außenumfang der Hilfsfeder (22) anliegt sowie an seinem zweiten, etwa radialen Arm eine Angriffsfläche aufweist, die durch Verschwenkung des Eingriffselementes (40) unter der Wirkung des vom Umfang der Hilfsfeder (22) ausgeübten Druckes in Axialrichtung auf eine gehäusefeste Reibfläche (46) zu verlagert wird.

7. Gurtaufroller nach Anspruch 6, dadurch gekennzeichnet, daß zwischen der Angriffsfläche des zweiten Armes des Eingriffselementes (40) und der gehäusefesten Reibfläche (46) eine frei drehbar gelagerte Reibscheibe (44) angeordnet ist und auf ihrer der Angriffsfläche zugewandten Seite triebschlüssig mit der Angriffsfläche zusammenwirkt sowie auf ihrer der Reibfläche (46) zugewandten Seite eine mit dieser zusammenwirkende Reibfläche aufweist.

8. Gurtaufroller nach Anspruch 3, dadurch gekennzeichnet, daß das Eingriffsteil (40) durch den vom Außenumfang der Hilfsfeder (22) ausgeübten Druck in Radialrichtung auswärts in die Aktivierungsstellung gedrückt wird, in der es einen Reibungsschluß zwischen dem Klinkenrad (24) und einer gehäusefesten, das Klinkenrad umgebenden Reibfläche herstellt.

9. Gurtaufroller nach einem der vorstehenden Ansprüche, dadurch gekennzeichnet, daß mehrere Eingriffselemente (40), die über die Kreisfläche einer Seite des Klinkenrades (24) verteilt sind, auf einem an diesem Klinkenrad gehaltenen Drahtring (42) gelagert sind.

10. Gurtaufroller nach einem der vorstehenden Ansprüche, dadurch gekennzeichnet, daß die Hilfsfeder (22) im Bereich ihrer äußeren Lage oder Lagen verstärkt ist, so daß die einwärts von diesem Bereich gelegenen Windungen beim Spannen der Hilfsfeder (22) zusammengezogen werden, bevor sich der Außenumfang der Hilfsfeder von dem Eingriffselement (40) löst.

11. Gurtaufroller nach Anspruch 10, dadurch gekennzeichnet, daß die Verstärkung der Hilfsfeder (22) im Bereich ihrer äußeren Lage oder Lagen durch eine eingelegte Blattfeder bewirkt ist.

## Claims

1. Belt retractor for safety-belt restraining systems in motor vehicles comprising a retractor spring effective between a housing-fixed member and the belt reel taking up the webbing, a ratchet wheel (24) functionally rotatably mounted between the retractor spring (38) and the belt reel (12) and drivingly connected to one end of the retractor spring (38), and a spiral auxiliary spring (22) of weaker dimensions than the retractor spring, the auxiliary spring (22) in turn being operative between the ratched wheel (24) and the belt reel (12), the ratchet wheel (24) cooperating with a pawl (34) which locks or releases the rotational movement of the ratchet wheel (24) in dependence upon a control criterion and a brake means (40, 44, 46) being associated with the ratchet wheel (24), said brake means (40, 44, 46) opposing the rotation thereof relatively to the housing (10), characterized in that the function of the brake means (40, 44, 46) is controlled by the outer diameter of the auxiliary spring (22), the brake means (40, 44, 46) being activated at least when the auxiliary spring (22) is relaxed and inactive when the auxiliary spring (22) is tensioned.

2. Belt retractor according to claim 1, characterized in that the auxiliary spring (22) with its outer periphery actuates a mechanism (40) which governs the function of the brake means.

3. Belt retractor according to claim 2, characterized in that the mechanism comprises at least one engagement member (40) which is mounted on the ratchet wheel (24) and on which the outer periphery of the auxiliary spring (22) bears at least in the incompletely tensioned state thereof and which is movable by the force of the auxiliary spring (22) into an activating position in which said engagement member (40) produces a frictional engagement with a housing-fixed member (48).

4. Belt retractor according to claim 3, characterized in that the engagement member (40) when the auxiliary spring (22) is fully tensioned is detached from the outer periphery of the auxiliary spring (22) and is moved automatically into an inactivated position in which it does not produce any frictional engagement with the housing-fixed member (48).

5. Belt retractor according to claim 3 or 4, characterized in that the engagement element (40) is pressed in the axial direction into the activating position by the pressure exerted by the outer periphery of the auxiliary spring (22).

6. Belt retractor according to claim 5, characterized in that the engagement element (40) is formed as a two-armed lever which is pivotally mounted on the ratchet wheel (24) and with its first substantially axial arm bears on the outer periphery of the auxiliary spring (22) and on its second substantially radial arm has an engagement surface which by pivoting of the engagement element (40) under the action of the pressure exerted by the periphery of the auxiliary spring (22) is moved in the axial direction towards a housing-fixed frictional surface (46).

7. Belt retractor according to claim 6, characterized in that between the engagement surface of the second arm of the engagement element (40) and the housing-fixed frictional surface (46) a freely rotatably mounted friction disc (44) is arranged and on its side facing the engagement surface cooperates drivingly with said engagement surface and on its side facing the friction surface (46) has a friction surface cooperating with said friction surface (46).

8. Belt retractor according to claim 3, characterized in that the engagement member (40) is pressed by the pressure exerted by the outer periphery of the auxiliary spring (22) outwardly in the radial direction into the activating position in which it establishes a frictional engagement between the ratchet wheel (24) and a housing-fixed friction surface surrounding the ratchet wheel.

9. Belt retractor according to any one of the preceding claims, characterized in that a plurality of engagement elements (40) which are distributed over the circular face of one side of the ratchet wheel (24) are mounted on a wire ring (42) held on said ratchet wheel.

10. Belt retractor according to any one of the preceding claims, characterized in that the auxiliary spring (22) is strengthened in the region of its outer layer or layers so that the convolutions disposed inwardly of said region are contracted on tensioning of the auxiliary spring (22) before the outer periphery of the auxiliary spring detaches itself from the engagement element (40).

11. Belt retractor according to claim 10, characterized in that the strengthening of the auxiliary spring (22) in the region of its outer layer or layers is effected by an inserted leaf spring.

## Revendications

1. Enrouleur de ceinture pour systèmes de retenue de ceinture de sécurité dans des véhicules automobiles, comprenant un ressort d'enroulement agissant entre une partie solidaire du boîtier et la bobine de ceinture qui reçoit la sangle de ceinture, une roue à cliquet (24) qui est montée tournante de manière fonctionnelle entre le ressort d'enroulement (38) et la bobine de ceinture (12), et avec laquelle l'une des extrémités du ressort d'enroulement (38) crée une liaison d'entraînement, et un ressort auxiliaire spiralé (22) plus faible que le ressort d'enroulement, le ressort auxiliaire (22) agissant, pour sa part, entre la roue à cliquet (24) et la bobine de ceinture (12), et la roue à cliquet (24) coopérant avec un cliquet (34) qui, en fonction d'un critère de commande, interdit ou autorise le mouvement de rotation de la roue à cliquet (24), et à la roue à cliquet (24) étant associé un dispositif de freinage (40, 44, 46) qui en empêche la rotation par rapport au boitier (10), caractérisé en ce que le fonctionnement du dispositif de freinage (40, 44, 46) est commandé par l'intermédiaire du diamètre extérieur du ressort auxiliaire (22), le dispositif de freinage (40, 44, 46) étant actionné au moins lorsque le ressort auxiliaire (22) est relâché et étant inactif lorsque le ressort auxiliaire (22) est tendu.

2. Enrouleur selon la revendication 1, caractérisé en ce que la périphérie extérieure du ressort auxiliaire (22) actionne un mécanisme (40) qui détermine le fonctionnement du dispositif de freinage.

3. Enrouleur selon la revendication 2, caractérisé en ce que le mécanisme comporte au moins une pièce de contact (40) qui est montée sur la roue à cliquet (24), contre laquelle la périphérie extérieure du ressort auxiliaire (22) est appliquée au moins lorsque ce dernier n'est pas à l'état complètement tendu, et qui peut être amenée, par la force du ressort auxiliaire (22), dans une position d'actionnement où cette pièce de contact (40) crée une liaison par friction avec une partie (48) solidaire du boîtier.

4. Enrouleur selon la revendication 3, caractérisé en ce que, lorsque le ressort auxiliaire (22) est complètement tendu, la pièce de contact (40) est séparée de la périphérie extérieure du ressort auxiliaire (22) et amenée automatiquement dans une position inactive où elle ne crée pas de liaison par friction avec la partie (48) solidaire du boîtier.

5. Enrouleur selon l'une des revendications 3 et 4, caractérisé en ce que l'élément de contact (40) est poussé, dans la direction axiale, en position d'actionnement par la pression exercée par la périphérie extérieure du ressort auxiliaire (22).

6. Enrouleur selon la revendication 5, caractérisé en ce que l'élément de contact (40) est conçu sous la forme d'un levier à deux bras qui est monté pivotant sur la roue à cliquet (24), dont le premier bras, sensiblement axial, est appliqué contre la périphérie extérieure du ressort auxiliaire (22) et dont le second bras, sensiblement radial, comporte une surface d'attaque qui, lors du pivotement de l'élément de contact (40) sous l'action de la pression exercée par la périphérie du ressort auxiliaire (22), est déplacée dans la direction axiale vers une surface de friction (46) solidaire du boîtier.

7. Enrouleur selon la revendication 6, caractérisé en ce que, entre la surface d'attaque du second bras de l'élément de contact (40) et la surface de friction (46) solidaire du boîtier, est disposé un disque de friction (44) qui est monté en libre rotation et qui, sur son côté tourné vers la surface d'attaque, crée une liaison d'entraînement avec la surface d'attaque et, sur son côté tourné vers la surface de friction (46), comporte une surface de friction coopérant avec cette dernière.

8. Enrouleur selon la revendication 3, caractérisé en ce que, en raison de la pression exercée par la périphérie extérieure du ressort auxiliaire (22), la pièce de contact (40) est poussée dans la direction radiale, vers l'extérieur, dans la position d'actionnement où elle crée une liaison par friction entre la roue à cliquet (24) et une surface de friction qui est solidaire du boîtier et entoure la roue à cliquet.

9. Enrouleur selon l'une des revendications précédentes, caractérisé en ce que plusieurs éléments de contact (40), qui sont répartis sur la surface circulaire d'un des côtés de la roue à cliquet (24), sont montés sur un anneau (42) en fil métallique maintenu sur cette roue à cliquet.

10. Enrouleur selon l'une des revendications précédentes, caractérisé en ce que le ressort auxiliaire (22) est renforcé dans la zone de sa ou de ses couches extérieures, de façon que, lors de la mise en tension du ressort auxiliaire (22), les spires situées à l'intérieur de cette zone soient serrées les unes contre les autres avant que la périphérie extérieure du ressort auxiliaire ne se sépare de l'élément de contact (40).

11. Enrouleur selon la revendication 10, caractérisé en ce que le renforcement du ressort auxiliaire (22) dans la zone de sa ou de ses couches extérieures est effectué au moyen d'un ressort à lame inséré.
